# EUROPÄISCHE PATENTANMELDUNG

(11) **EP 3 701 842 A1**
(43) Veröffentlichungstag der Anmeldung: **02.09.2020**
(21) Anmeldenummer: 20157120.5
(22) Anmeldetag: 13.02.2020
(51) Int. Cl.: A47J 31/36

(54) **SPINDELBRÜHEINHEIT MIT VERBESSERTER ZWANGSSTEUERUNG**

(30) Priorität: 01.03.2019 DE 102019202815
(71) Anmelder: BSH Hausgeräte GmbH, 81739 München (DE)
(72) Erfinder: Thies, Manuel, 84574 Taufkirchen (DE); Rajko, Balint, 84524 Neuötting (DE); Quittek, Benno, 83278 Traunstein (DE); Eder, Florian, 83132 Pittenhart (DE); Sollmann, Martin, 83278 Traunstein (DE); Bräuer, Josef, 83115 Neubeuern (DE); Bücherl, Thomas, 83329 Waging am See (DE); Berginc, Miha, 3000 Celje (SI)

(57) **Zusammenfassung**

Ein Kaffeevollautomat, insbesondere für Haushaltszwecke, mit einer Spindelbrüheinheit (1) mit einer Brühkammer (10), mit einer Gewindespindel (20) zum Antrieb der Brühkammer (10) über einen Brühkammerträger (12) der Brühkammer (10) als Spindelmutter und mit einem Gehäuse (50), wobei die Brühkammer (10) seitlich neben der Gewindespindel (20) derart angeordnet ist, dass sie in einer Verschwenkrichtung (S) orthogonal zu der Spindelachse (A) verschwenkbar und in einer Verfahrrichtung (F) parallel zur Spindelachse (A) verfahrbar ist, mit einem Flansch (22; 22e) an einem unteren Ende (24) der Gewindespindel (20), mit einer lösbaren Kupplung (30; 30e) zwischen der Gewindespindel (20) und der Brühkammer (10), die zum Verschwenken gekuppelt und für eine selbsttätige Betätigung eingerichtet ist, indem sie Rastmittel (32; 32e; 34; 34e) als formschlüssige Kupplung (30; 30e) zwischen der Gewindespindel (20) und der Brühkammer (10) umfasst, nämlich einen von der Gewindespindel (20) oder dem Brühkammerträger (12) axial abstehenden federnd gelagerten Rasthaken (32; 32e) und eine Rastnase (34; 34e) am Brühkammerträger (12) oder an der Gewindespindel (20), eine in Umfangsrichtung geneigte Sicherungsfläche (36; 36e) an einem der beiden Rastmittel (32; 32e; 34; 34e), eine mit der Sicherungsfläche (36; 36e) korrespondierende Kontaktfläche (40; 40e) am anderen Rastmittel (32; 32e; 34; 34e), eine feststehende Stützfläche (52; 52e) am Gehäuse (50) zum Abstützen des Rasthakens (32; 32e) zur Aktivierung der Kupplung (30; 30e) sowie einen axial vom Flansch (22; 22e) abstehenden Anschlag (38; 38e) und eine mit dem Anschlag (38; 38e) zusammenwirkende Schubfläche (42; 42e) am Brühkammerträger (12), wird weitergebildet durch einen Rasthaken (32e), der bei bestimmungsgemäßer Betätigung in zwei unterschiedliche Richtungen (M; N) auslenkbar ist.

## Beschreibung

Die Erfindung betrifft einen Kaffeevollautomaten, insbesondere für Haushaltszwecke, mit einer Spindelbrüheinheit mit einer Brühkammer, mit einer Gewindespindel zum Antrieb der Brühkammer über einen Brühkammerträger der Brühkammer als Spindelmutter und mit einem Gehäuse, wobei die Brühkammer seitlich neben der Gewindespindel derart angeordnet ist, dass sie in einer Verschwenkrichtung orthogonal zu der Spindelachse verschwenkbar und in einer Verfahrrichtung parallel zur Spindelachse verfahrbar ist, mit einem Flansch an einem unteren Ende der Gewindespindel, mit einer lösbaren Kupplung zwischen der Gewindespindel und der Brühkammer, die zum Verschwenken gekuppelt und für eine drehwinkelabhängig selbsttätige Betätigung eingerichtet ist, indem sie Rastmittel als formschlüssige Kupplung zwischen der Gewindespindel und der Brühkammer umfasst, nämlich einen von der Gewindespindel oder dem Brühkammerträger axial abstehenden federnd gelagerten Rasthaken und eine Rastnase am Brühkammerträger oder an der Gewindespindel, eine in Umfangsrichtung geneigte Sicherungsfläche an einem der beiden Rastmittel, eine mit ihr korrespondierende Kontaktfläche am anderen Rastmittel, eine feststehende Stützfläche am Gehäuse zum Abstützen des Rasthakens zur Aktivierung der Kupplung sowie einen axial vom Flansch abstehenden Anschlag und eine mit dem Anschlag zusammenwirkende Schubfläche am Brühkammerträger.

Die DE 10 2013 214 578 zeigt einen Kaffeevollautomaten mit einer Spindelbrüheinheit mit Brühkammer, mit einer Gewindespindel zum Antrieb der Brühkammer über einen Brühkammerträger der Brühkammer als Spindelmutter, wobei die Brühkammer seitlich neben der Gewindespindel derart angeordnet ist, dass sie in einer Verschwenkrichtung orthogonal zu der Spindelachse verschwenkbar und in einer Verfahrrichtung parallel zur Spindelachse verfahrbar ist, und mit einer lösbaren Kupplung zwischen der Gewindespindel und der Brühkammer, die zum Verschwenken gekoppelt ist. Der Kaffeevollautomat erfüllt die benutzerseitig an ihn gerichteten Erwartungen.

Es ist daher Aufgabe der Erfindung, einen Kaffeevollautomat der eingangs genannten Art derart weiterzubilden, dass er sich als noch zuverlässiger und herstellungsseitig als kostengünstiger erweist.

Diese Aufgabe wird bei dem eingangs genannten Kaffeevollautomaten erfindungsgemäß dadurch gelöst, dass er einen Rasthaken umfasst, der bei bestimmungsgemäßer Betätigung der selbsttätigen Kupplung in zwei unterschiedliche Richtungen auslenkbar ist.

Die Erfindung setzt auf dem Gegenstand der oben genannten DE 10 2013 214 578 auf, deren Inhalt zur Vermeidung unnötiger Wiederholungen insbesondere hinsichtlich des Aufbaus der Spindelbrüheinheit und des Zusammenwirkens ihrer Bestandteile, insbesondere der Gewindespindel, des Brühkammerträgers und des Gehäuses der Spindelbrüheinheit sowie der lösbaren und selbsttätigen Kupplung zwischen der Gewindespindel und dem Brühkammerträger auch zum Gegenstand der vorliegenden Anmeldung gemacht wird.

Wesentliche Bestandteile der Kupplung sind demnach ein Rasthaken an der Gewindespindel oder an der Brühkammer und eine Rastnase an der Brühkammer oder an der Gewindespindel. Der Rasthaken ist zur Aktivierung oder Deaktivierung der Kupplung vorzugsweise in einer Richtung parallel zur Spindelachse auslenkbar und federvorgespannt gelagert. Seine Auslenkbewegung, die durch Verdrehen der Gewindespindel relativ zum Brühkammerträger in beiden Drehrichtungen erfolgen kann, ist in Abhängigkeit von der Lage der Gewindespindel oder der Brühkammer relativ zum Gehäuse drehwinkelabhängig durch eine Stützfläche am Gehäuse gehemmt.

Eine "bestimmungsgemäße Betätigung" erfährt der Rasthaken - wie auch der DE 10 2013 214 578 zu entnehmen - im Betrieb des Kaffeevollautomaten, nämlich durch Verdrehen der Gewindespindel relativ zum Brühkammerträger. Der Rasthaken kann also wie bisher drehwinkelabhängig in einer ersten Richtung ausgelenkt eine Aktivierung oder Deaktivierung der Kupplung ermöglichen. Anders als bisher kann sich der Rasthaken erfindungsgemäß nun auch in eine weitere, von der ersten Richtung verschiedene zweite Richtung auslenken lassen. Die erste und die zweite Richtung der Auslenkung können drehrichtungsabhängig aktivierbar sein, so dass eine Auslenkung des Rasthakens in die erste Richtung mit einer ersten Drehrichtung gekoppelt und eine Auslenkung des Rasthakens in die zweite Richtung mit der der ersten Drehrichtung entgegengesetzten zweiten Drehrichtung gekoppelt ist. Damit kann der Rasthaken beim Auslenken in die erste Richtung unverändert eine der beiden Funktionen einer Kupplung ausfüllen und zusätzlich beim Auslenken in die zweite Richtung eine weitere Funktion übernehmen, die sich mit geringem technischen Aufwand verwirklichen lässt, z.B. das Schalten eines dritten Bauteils wie einer Sperrklinke oder eines Ventils.

Die Auslenkrichtungen des Rasthakens zur Aktivierung bzw. Deaktivierung der Kupplung einerseits und zum Ausfüllen der weiteren Funktion andererseits kann in nahezu jede beliebige Richtung orientiert sein, solange sie ihre beiden Funktionen zuverlässig ausfüllt. Ihre Orientierung kann sich vor allem nach den Platzverhältnissen innerhalb des Kaffeevollautomaten und einer konstruktiv und herstellungsseitig günstigen Anordnung der Rastmittel und der Stützfläche richten. Nach einer vorteilhaften Ausgestaltung der Erfindung kann der Kaffeevollautomat daher einen vom Flansch abstehenden Rasthaken und eine Rastnase am Brühkammerträger umfassen. Der Rasthaken kann vorzugsweise in einer Auslenkrichtung parallel zur Spindelachse federnd gelagert sein, um einen kompakten Aufbau der Kupplung zu ermöglichen. Die Anordnung der spindelseitigen Rastmittel der Kupplung am Flansch und damit in einem unteren Bereich der Gewindespindel ist deswegen vorteilhaft, weil die Betätigung der Kupplung zu einem Zeitpunkt stattfindet, an dem sich die Brühkammer in eben jenem unteren Bereich der Gewindespindel befindet.

Auf dem Flansch lassen sich sowohl der Rasthaken samt Federlagerung als auch die Anschlagfläche günstig ausbilden und entsprechend den Erfordernissen, nämlich der Verschwenkbewegung der Brühkammer, und ggf. mehrfach positionieren. Nach einer weiteren vorteilhaften Ausgestaltung der Erfindung kann der Flansch daher zumindest abschnittsweise zugleich als Federlagerung des Rasthakens ausbildet sein. Dazu kann er aus einem geeigneten Material und in geeigneter Materialdicke ausgebildet sein. Dementsprechend kann er in einer geeignet dimensionierten Kreisbogenlänge und radial von der Gewindespindel bzw. dem übrigen Flansch getrennt sein, so dass er eine in Umfangsrichtung gekrümmte Federzunge ausbildet, an deren freiem Ende der Rasthaken positioniert sein kann, wie auch in der DE 10 2013 214 578 beschrieben. Der Flansch kann zudem eine Nulllage und zwei Auslenkstellungen des Rasthakens entgegen einer Vorspannkraft der Federlagerung definieren. Die beiden Auslenkstellungen lassen sich drehrichtungsabhängig durch Auslenken des Rasthakens in die erste und in die zweite Richtung erzielen. Die Nulllage kann eine Koppelungs- und die Auslenkstellungen können Entkoppelungsstellungen darstellen. Alternativ kann die Nulllage eine Entkoppelungsstellung und die Auslenkstellungen können jeweils eine Koppelungsstellung darstellen, wobei eine Koppelungsstellung die Aktivierung der Kupplung und die andere Koppelungsstellung einer oben genannten weiteren Funktion dienen kann. Unabhängig davon kann in einem einfachen Fall die Bewegung des Rasthakens in der zweiten Auslenkrichtung auch lediglich dazu benutzt werden, ein beispielsweise toleranzbedingtes Verhaken des Rasthakens beim Verdrehen in die der zweiten Auslenkrichtung zugeordnete zweite Drehrichtung zu vermeiden oder einen Rückweg des Rasthakens mit einer geringeren Auslenkung, geringeren Auslenkkraft und dadurch evtl. einer geringeren Geräuschentwicklung zu erzielen.

Die erste und die zweite Auslenkrichtung des Rasthakens können einander entgegengesetzt gerichtet sein. Damit kann die Kupplung einen schlanken und leicht nachvollziehbaren Aufbau bieten, weil die Auslenkrichtungen des Rasthakens in derselben Ebene liegen. Außerdem erfordert die Betätigung des Rasthakens in seiner ersten wie in seiner zweiten Auslenkrichtung weitgehend denselben Kraftaufwand, jedenfalls wenn in beiden Richtungen dieselbe Federzunge - aber in entgegengesetzte Richtungen - beaufschlagt wird.

Zur Umsetzung einer Auslenkung des Rasthakens in einander entgegengesetzte, in derselben Ebene liegende Richtungen kann der Kaffeevollautomat einen vom Rasthaken an seinem freien Ende axial abstehenden Abschnitt umfassen, der die Sicherungsfläche und eine ihr in Umfangsrichtung gegenüberliegende, ihr abgewandt, aber gleichsinnig geneigte Leitfläche umfasst, und als Rastnase einen axial abstehenden Block, der die Kontaktfläche und eine ihr am Block ebenfalls in Umfangsrichtung gegenüber, aber auf der anderen Seite des Blocks und damit ihr abgewandt liegende, gleichsinnig geneigte und mit der Leitfläche am Rasthaken korrespondierende Gleitfläche aufweist. Der erfindungsgemäße Rasthaken erfüllt damit in einer ersten Bewegungsrichtung relativ zur Rastnase die aus der DE 10 2013 214 578 A1 bekannte Funktion, indem er in einer ersten Drehrichtung der Gewindespindel relativ zum Brühkammerträger bei Anlaufen der Sicherungsfläche an der Kontaktfläche aus seiner Nulllage heraus in der ersten Auslenkrichtung in eine erste Auslenkstellung verlagert wird, sofern es keine feststehende Stützfläche am Gehäuse verhindert. Insofern sind der Rasthaken und die Rastnase gegenüber der DE 10 2013 214 578 A1 weitgehend unverändert ausgebildet.

In einer zweiten Drehrichtung dagegen läuft nun die erfindungsgemäße Leitfläche des Rasthakens aus seiner Nulllage kommend an der Gleitfläche der Rastnase an. Die Gleitfläche der Rastnase ist erfindungsgemäß nun in der entgegengesetzten Richtung wie die Rampe (Bezugszeichen 35 in Figuren 4a, 4b) in der DE 10 2013 214 578 A1 geneigt und damit in der gleichen Richtung wie die Kontaktfläche. Aufgrund der Neigungen der Leitfläche und der Gleitfläche, die gleichsinnig, beispielsweise parallel zur Neigung der Sicherungsfläche und der Kontaktfläche geneigt verlaufen, aber ihnen jeweils abgewandt am Rasthaken bzw. an der Rastnase gegenüberliegen, lässt sich der Rasthaken aus seiner Nulllage entgegen der Federkraft nun in eine zu seiner ersten Auslenkrichtung entgegengesetzte zweite Auslenkrichtung verlagern. Dort kann er eine weitere Funktion im obigen Sinne übernehmen, bevor er nach Überwinden des abstehenden Blocks im Bereich der Kontaktfläche in seine Ausgangslage bzw. Nulllage zurückfedert. Damit erfährt der Rasthaken in der ersten Drehrichtung eine andere Auslenkbewegung als in der zweiten Drehrichtung, womit er drehrichtungsabhängig zwar in derselben Bewegungsebene verbleibt, aber auf unterschiedlichen Bahnen läuft.

Nach einer dazu alternativen Ausgestaltung der Erfindung kann der Rasthaken in unterschiedlichen Ebenen auslenkbar ausgebildet sein. So kann seine erste Auslenkrichtung beispielsweise in einer zur Gewindespindel achsparallelen ersten Ebene liegen, seine zweite Auslenkrichtung dagegen in einer zweiten Ebene, die mit der ersten Ebene einen Winkel einschließt. Die beiden Ebenen können beispielsweise aufeinander senkrecht stehen, sodass der Rasthaken sich in einer ersten Auslenkrichtung achsparallel und in einer zweiten Auslenkrichtung radial auslenken lässt. Die Federzunge als Federlagerung wird folglich je nach Auslenkrichtung um unterschiedliche Auslenkachsen gebogen. Dieser Umstand kann vorteilhaft dafür genutzt werden, eine unterschiedliche Betätigungskraft für den Rasthaken generieren zu können, die von dessen Auslenkrichtung abhängt. Dazu kann die Federzunge in unterschiedlichen Achsrichtungen unterschiedliche Trägheitsmomente aufweisen, beispielsweise aufgrund einer geeigneten Querschnittswahl. Im einfachsten Fall erfordert dann die erste Auslenkrichtung, die mit einer ersten Drehrichtung gekoppelt ist, beispielsweise eine höhere Betätigungskraft als die zweite Auslenkrichtung, die mit der entgegengesetzten zweiten Drehrichtung gekoppelt ist. Damit lässt sich der Rasthaken in der Hinrichtung mit einer anderen Betätigungskraft auslenken als in seiner Rückrichtung, was beispielsweise einer geringeren Geräuschentwicklung zugutekommen kann.

Zur Umsetzung einer Auslenkung des Rasthakens in unterschiedliche Richtungen, die nicht in derselben Ebene liegen, kann der Kaffeevollautomat alternativ einen ebenfalls vom Rasthaken an seinem freien Ende axial abstehenden Abschnitt aufweisen, der die Sicherungsfläche und eine geneigte Leitfläche umfasst, und einen als Rastnase axial abstehenden Block, der die Kontaktfläche und eine geneigte und mit der Leitfläche korrespondierende Gleitfläche umfasst, wobei aber die Mittelsenkrechten der Leitfläche und der Gleitfläche einerseits und die Mittelsenkrechten der Sicherungsfläche und der Kontaktfläche andererseits zueinander windschief sind. Die Mittelsenkrechten in der vorherigen Ausführungsform waren parallel oder schnitten sich, weil sie in derselben Ebene lagen. Die Neigung der Leitfläche und der Gleitfläche der vorliegenden Ausführungsform dagegen kann also nahezu jede weitere geneigte Lage jenseits der oben beschriebenen gegenüber der Sicherungsfläche und der Kontaktfläche parallelen oder gleichsinnig, aber nicht parallel geneigten Lage aufweisen, solange die Leitfläche und die Gleitfläche bei Anlage des Rasthakens an der Rastnase zueinander weitgehend parallel verlaufen. Diese Neigung führt dazu, dass der Rasthaken bei der zweiten Drehrichtung eine andere Auslenkrichtung erfährt als bei der ersten Drehrichtung, wobei die Auslenkrichtungen in unterschiedlichen Ebenen liegen. Diese Konstruktion bietet eine höhere konstruktive Flexibilität und kann beispielsweise aus Platzgründen gewählt werden. Außerdem kann sich dadurch leichter eine weitere Funktion mechanisch ankoppeln lassen.

Das Prinzip der Erfindung wird im Folgenden anhand einer Zeichnung beispielshalber noch näher erläutert. In der Zeichnung zeigen:
- Figur 1:: eine Brühgruppe nach dem Stand der Technik,
- Figur 2:: eine schematisierte Schnittansicht durch eine erfindungsgemäße Ausführungsform in einer horizontalen Ebene,
- Figuren 3a bis 3h:: eine schematische Abfolge der Aktivierung und Deaktivierung der erfindungsgemäßen Rastkupplung.

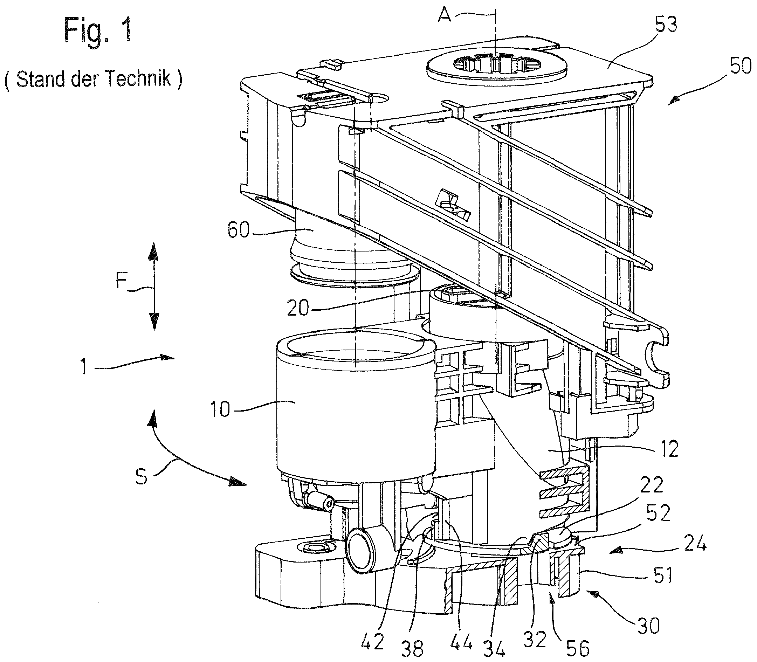

Figur 1 zeigt eine nahezu vollständige Spindelbrüheinheit 1 aus dem Stand der Technik, nämlich aus der DE 10 2013 214 578 A1. Sie besteht aus einer Brühkammer 10, einer Gewindespindel 20 und einem Gehäuse 50. Die überwiegend verdeckt dargestellte Gewindespindel 20 mit ihrer Drehachse A weist an ihrem unteren Ende 24 einen hier umlaufenden Flansch 22 auf. Er trägt einen senkrecht aufragenden Anschlag 38, der an einer Schubfläche 42 einer an einem Brühkammerträger 12 radial abstehenden Rippe 44 anliegt, und einen Rasthaken 32, der an einer Rastnase 34 an dem Brühkammerträger 12 anliegt. Der Anschlag 38, die Schubfläche 42, der Rasthaken 32 und die Rastnase 34 bilden die Rastkupplung 30. Der Brühkammerträger 12 ist betriebsbereit montiert und an einem unteren Ende der Gewindespindel 20 positioniert. Die Gewindespindel 20 ist beidseits im Gehäuse 50 aus einem Unterteil 51 und einem Oberteil 53 gelagert. Am Oberteil 53 und koaxial zur Brühkammer 10 ist ein Brühkolben 60 zu erkennen.

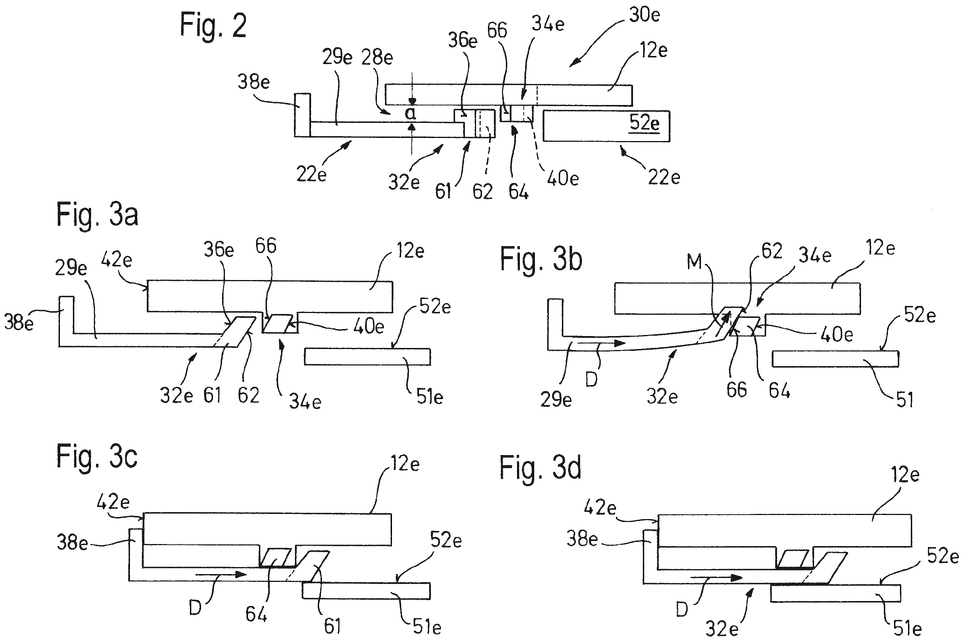

Das Unterteil 51 des Gehäuses 50, der Flansch 22 der Gewindespindel 20 und der Brühkammerträger 12 sind teilgeschnitten dargestellt. Dadurch wird die Anordnung einer Aussparung 56 in einer Stützfläche 52 relativ zum Rasthaken 32 deutlich: Sie liegt unmittelbar unter dem Rasthaken 32 und dessen Federzunge 29 (s. Figur 2). Sobald der Rasthaken 32 über der Aussparung 56 liegt und auf Zug belastet wird, kann er in sie eintauchen, um von der Rastnase 34 freizukommen. Bei einer Verdrehung der Gewindespindel 20 um 90° gegenüber der in Figur 1 dargestellten Position liegt der Rasthaken 32 über der Stützfläche 52, so dass er nicht abwärts ausgelenkt werden kann, sondern in seiner Rastposition an der Rastnase 34 und damit in einer aktivierten Position der Rastkupplung 30 verharrt. Wegen der übrigen Details wird auf die Beschreibung der Figuren 1 bis 3 der DE 10 2013 214 578 A1 verwiesen, die auch zum Gegenstand der folgenden Figurenbeschreibung gemacht wird. Zur Unterscheidung zwischen diesem Stand der Technik und der Erfindung tragen die Bezugszeichen der beschriebenen Merkmale den Index "e" bei im Übrigen identischer Bezeichnung.

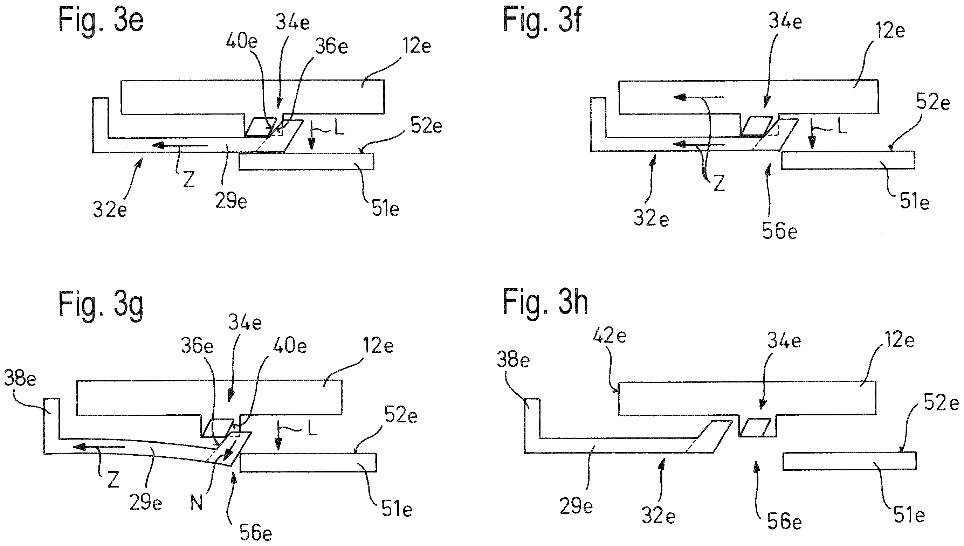

Figur 2 stellt nun eine schematisierte Schnittansicht durch eine erfindungsgemäße Ausführungsform der Rastkupplung 30e dar. Sie bietet sich in einer horizontalen Ebene der Ausführungsform, die einer Ebene entspricht, die in der Figur 1 parallel oberhalb der Stützfläche 52 liegen würde. Sie ist auch insofern schematisiert, als sie eine Teilabwicklung des Flanschs 22 (Figur 1) bzw. 22e (Figur 2) und eines unteren Gehäuseabschnitts des Brühkammerträgers 12 bzw. 12e darstellt. Sie bietet damit eine Draufsicht auf die Rastkupplung 30e und deren Rasthaken 32e, auf die Rastnase 34e und deren Stützfläche 52e. Denn abweichend vom Stand der Technik sind insbesondere der Rasthaken 32e und die Rastnase 34e der Erfindung nicht nur in einer vertikalen Ansichtsebene (vgl. Figuren 3a bis 3h), sondern auch in der Draufsicht der Figur 2 speziell ausgeformt.

Der Rasthaken 32e besitzt eine grundsätzlich unveränderte Federzunge 29e, mit der er am Flansch 22e angebracht ist. Die Federzunge 29e ergibt sich durch einen breiten (geradlinig dargestellten) Ringspalt 28e mit der Breite a. Das freie Ende des Rasthakens 32e ist erfindungsgemäß breiter als die Federzunge 29e ausgebildet, weil von ihm ein prismatischer Abschnitt 61 axial auswärts auf die nicht dargestellte Gewindespindel 20 hin und in den Ringspalt 28e hinein ragt. Er trägt die an sich bekannte Sicherungsfläche 36e. Auf einer ihr am prismatischen Abschnitt 61 gegenüberliegenden und abgewandten Seite trägt der Abschnitt 61 außerdem eine abwärts gerichtete Leitfläche 62 (vgl. Figur 3a). Sie ist in der gleichen Richtung geneigt wie die Sicherungsfläche 36e. Mit einer identischen Neigung der Sicherungsfläche 36e und der Leitfläche 62 kann der Abschnitt 61 die Raumform eines Spats oder Parallelepipeds aufweisen.

Die erfindungsgemäße Rastnase 34e steht nicht nur in an sich bekannter Weise unterseitig vom Brühkammerträger 12 ab. Sie trägt außerdem einen axial nach innen, also von der (nicht dargestellten) Gewindespindel 20 weg gerichtet abstehenden, ebenfalls prismatischen Block 64, dessen axiale Breite geringfügig kleiner ist als die Breite a des Spalts 28e. Der Block 64 trägt nicht nur die an sich bekannte abwärts gerichtete und geneigte Kontaktfläche 40e, sondern auch eine ihr am Block 64 gegenüberliegende und damit abgewandte und gleichsinnig geneigte Gleitfläche 66. Mit einer identischen Neigung der Kontaktfläche 40e und der Leitfläche 62 kann auch der Block 64 die Raumform eines Spats oder Parallelepipeds aufweisen (vgl. Figur 3a). Wesentlich aber ist, dass - wie auch im Stand der Technik - die Neigungen der Sicherungsfläche 36e und der Kontaktfläche 40e einerseits und - erfindungsgemäß - die Neigungen der Leitfläche 62 und der Gleitfläche 66 andererseits einander weitgehend entsprechen, weil sie jeweils zusammenwirken. Alternativ wäre eine Ausführung mit gekrümmten Flächen, die auf ebenfalls gekrümmten oder ebenen Flächen anliegen bzw. gleiten, auch möglich.

Die Figuren 3a bis 3h stellen nun eine schematische Abfolge der Aktivierung und Deaktivierung der erfindungsgemäßen Rastkupplung dar. Figur 3a zeigt zunächst eine an sich bekannte Position des Brühkammerträgers 12e, in der sich die Brühkammer 10 (nur in Fig. 1) am Ende einer vertikalen Abwärtsbewegung befindet, die durch eine Verdrehung der Gewindespindel 20 (vgl. Figur 1) hervorgerufen wird. Die Rastnase 34e und die Schubfläche 42e sind noch entfernt von der Rastnase 32e und dem Anschlag 38e.

Durch weiteres Verdrehen der Gewindespindel 20 in derselben Drehrichtung wie zum Abwärtsfahren der Brühkammer 10 (s. Figur 1) wird der Rasthaken 32e nach rechts gegen die Rastnase 34e geschoben. Dadurch kommen die Leitfläche 62 des Rasthakens 32e und die Leitfläche 66 der Rastnase 34e in Kontakt. Wegen deren Neigungen lässt ein fortgesetztes Verdrehen der Gewindespindel 20 den Rasthaken 32e gegen die Federkraft der Federzunge 29e erfindungsgemäß nun an der Rastnase 34e bzw. auf deren Bock 64 in eine erste Auslenkrichtung M aufwärts gleiten. Dabei wird die Federzunge 29e verbogen (Figur 3b), und zwar aufwärts und so lange, bis der Rasthaken 32e bei fortgesetzter Drehung mit seiner Sicherungsfläche 36e hinter die Kontaktfläche 40e der Rastnase 34e schnappt (vgl. Figur 3c) und die Federzunge 29e entspannt.

Zu diesem Zeitpunkt befindet sich bereits keine Aussparung 56 (Figur 1) mehr unter dem Rasthaken 32e, könnte es aber problemlos. In Figur 3c liegt bereits die Sicherungsfläche 52e unter dem Rasthaken 32e, so dass er hindernisfrei in Umfangsrichtung der Gewindespindel 20 weitergedreht wird. Außerdem kommt nun der Anschlag 38e in bekannter Weise an der Schubfläche 42e zu liegen und überträgt eine Druckkraft D auf den Brühkammerträger 12e.

Figur 3d zeigt die fortgesetzte Drehung der Gewindespindel 20, die durch Anlage des Anschlags 38e am Brühkammerträger 12e die Brühkammer 10 in eine horizontale Drehrichtung mitnimmt. Damit hat die Brühkammer 10 ihre maximale Ausschwenkposition erreicht. Daraufhin kehrt die Gewindespindel 20 ihre Drehrichtung um.

Die Abfolgen der Figuren 3e bis 3h und die dadurch erzielte Funktion der Erfindung entsprechen derjenigen der Figuren 4e bis 4h der DE 10 2013 214 578 A1. Sie brauchen daher hier nicht detailliert beschrieben zu werden. Die dortige Beschreibung der Figuren 4e bis 4h ist sinngemäß auch Gegenstand der vorliegenden Anmeldung.

Da es sich bei der vorhergehenden, detailliert beschriebenen Rastkupplung um ein Ausführungsbeispiel handelt, kann es in üblicher Weise vom Fachmann in einem weiten Umfang modifiziert werden, ohne den Bereich der Erfindung zu verlassen. Insbesondere können auch die konkreten Ausgestaltungen und Neigungsrichtungen der Gleit- und Leitflächen in anderer Form als in der hier beschriebenen erfolgen. Ebenso können die Auslenkungen des Rasthakens in andere Richtungen weisen, wenn dies aus Platzgründen bzw. gestalterischen Gründen notwendig ist. Weiterhin schließt die Verwendung der unbestimmten Artikel "ein" bzw. "eine" nicht aus, dass die betreffenden Merkmale auch mehrmals oder mehrfach vorhanden sein können.

### Bezugszeichenliste

- 1: Spindelbrüheinheit
- 10: Brühkammer
- 12, 12e: Brühkammerträger
- 20: Gewindespindel
- 22, 22e: Flansch
- 24: unteres Ende
- 28e: Ringspalt
- 30, 30e: Rastkupplung
- 32, 32e: Rasthaken
- 34, 34e: Rastnase
- 36, 36e: Sicherungsfläche
- 38, 38e: Anschlag
- 40, 40e: Kontaktfläche
- 42, 42e: Schubfläche
- 44: Rippe
- 50: Gehäuse
- 51, 51e: Unterteil
- 52, 52e: Stützfläche
- 53: Oberteil
- 56, 56e: Aussparung
- 60: Brühkolben
- 61: prismatischer Abschnitt
- 62: Leitfläche
- 64: Block
- 66: Gleitfläche
- A: Spindelachse
- D: Druckkraft
- F: Verfahrrichtung
- L: Auslenkkraft
- M, N: Auslenkrichtungen
- S: Verschwenkrichtung
- Z: Zugkraft
- a: Spaltbreite

## Patentansprüche

1. Kaffeevollautomat, insbesondere für Haushaltszwecke, mit einer Spindelbrüheinheit (1) mit einer Brühkammer (10), mit einer Gewindespindel (20) zum Antrieb der Brühkammer (10) über einen Brühkammerträger (12) der Brühkammer (10) als Spindelmutter und mit einem Gehäuse (50), wobei die Brühkammer (10) seitlich neben der Gewindespindel (20) derart angeordnet ist, dass sie in einer Verschwenkrichtung (S) orthogonal zu der Spindelachse (A) verschwenkbar und in einer Verfahrrichtung (F) parallel zur Spindelachse (A) verfahrbar ist, mit einem Flansch (22; 22e) an einem unteren Ende (24) der Gewindespindel (20), mit einer lösbaren Kupplung (30; 30e) zwischen der Gewindespindel (20) und der Brühkammer (10), die zum Verschwenken gekuppelt und für eine selbsttätige Betätigung eingerichtet ist, indem sie Rastmittel (32; 32e; 34; 34e) als formschlüssige Kupplung (30; 30e) zwischen der Gewindespindel (20) und der Brühkammer (10) umfasst, nämlich einen von der Gewindespindel (20) oder dem Brühkammerträger (12) axial abstehenden, federnd gelagerten Rasthaken (32; 32e) und eine Rastnase (34; 34e) am Brühkammerträger (12) oder an der Gewindespindel (20), eine in Umfangsrichtung geneigte Sicherungsfläche (36; 36e) an einem der beiden Rastmittel (32; 32e; 34; 34e), eine mit der Sicherungsfläche (36; 36e) korrespondierende Kontaktfläche (40; 40e) am anderen Rastmittel (32; 32e; 34; 34e), eine feststehende Stützfläche (52; 52e) am Gehäuse (50) zum Abstützen des Rasthakens (32; 32e) zur Aktivierung der Kupplung (30; 30e) sowie einen axial vom Flansch (22; 22e) abstehenden Anschlag (38; 38e) und eine mit dem Anschlag (38; 38e) zusammenwirkende Schubfläche (42; 42e) am Brühkammerträger (12), **gekennzeichnet durch** einen Rasthaken (32e), der bei bestimmungsgemäßer Betätigung in zwei unterschiedliche Richtungen (M; N) auslenkbar ist.

2. Kaffeevollautomat nach Anspruch 1, **gekennzeichnet durch** einen vom Flansch (22e) abstehenden Rasthaken (32e) und eine Rastnase (34e) am Brühkammerträger (12e).

3. Kaffeevollautomat nach Anspruch 1 oder 2, **gekennzeichnet durch** einen zumindest abschnittsweise zugleich als Federlagerung (29e) des Rasthakens (32e) ausgebildeten Flansch (22e), der eine Nulllage und zwei Auslenkstellungen des Rasthakens (32e) gegen eine Vorspannkraft der Federlagerung (29e) definiert.

4. Kaffeevollautomat nach Anspruch 1 bis 3, **dadurch gekennzeichnet, dass** der Rasthaken (32e) in derselben Ebene auslenkbar ist.

5. Kaffeevollautomat nach dem obigen Anspruch, **gekennzeichnet durch** einen vom Rasthaken (32e) an seinem freien Ende axial abstehenden Abschnitt (61), der die Sicherungsfläche (36e) und eine ihr gegenüberliegende, gleichsinnig geneigte Leitfläche (62) umfasst, und durch einen als Rastnase (34e) axial abstehenden Block (64), der die Kontaktfläche (40e) und eine ihr gegenüberliegende, gleichsinnig geneigte und mit der Leitfläche (62) korrespondierende Gleitfläche (66) umfasst.

6. Kaffeevollautomat nach Anspruch 1, **dadurch gekennzeichnet, dass** der Rasthaken in unterschiedlichen Ebenen auslenkbar ist.

7. Kaffeevollautomat nach dem obigen Anspruch, **gekennzeichnet durch** einen vom Rasthaken an seinem freien Ende axial abstehenden Abschnitt, der die Sicherungsfläche und eine geneigte Leitfläche umfasst, und durch einen von der Rastnase axial abstehenden Block, der die Kontaktfläche und eine geneigte und mit der Leitfläche korrespondierende Gleitfläche umfasst, wobei die Mittelsenkrechten der Leitfläche und der Gleitfläche einerseits und die Mittelsenkrechten der Sicherungsfläche und der Kontaktfläche andererseits zueinander windschief sind.
